**Europäisches Patentamt**

**European Patent Office**

**Office européen des brevets**

(19)

(11) Numéro de publication: **0 108 653**
**B1**

(12) # FASCICULE DE BREVET EUROPEEN

(45) Date de publication du fascicule du brevet:
**11.03.87**

(51) Int. Cl.⁴: **A 23 N 15/02**

(21) Numéro de dépôt: **83401419.3**

(22) Date de dépôt: **08.07.83**

(54) Egrappoir à vendange.

(30) Priorité: **09.11.82 FR 8218791**

(43) Date de publication de la demande:
**16.05.84 Bulletin 84/20**

(45) Mention de la délivrance du brevet:
**11.03.87 Bulletin 87/11**

(84) Etats contractants désignés:
**DE FR IT**

(56) Documents cités:
**DE - A - 2 015 130**
**DE - C - 804 617**
**FR - A - 1 291 697**
**US - A - 2 543 571**

(73) Titulaire: **S.O.M.A.V.I., rue de la Métallurgie,
F-34510 Florensac (FR)**

(72) Inventeur: **Pera Jean, Lotissement Pera,
F-34510 Florensac (FR)**

(74) Mandataire: **Rinuy, Guy et al, Cabinet Rinuy et
Santarelli 14, Avenue de la Grande Armée, F-75017 Paris
(FR)**

## Description

La présente invention se rapporte aux égrappoirs à vendange dont le but est de séparer les baies d'un raisin de la rafle.

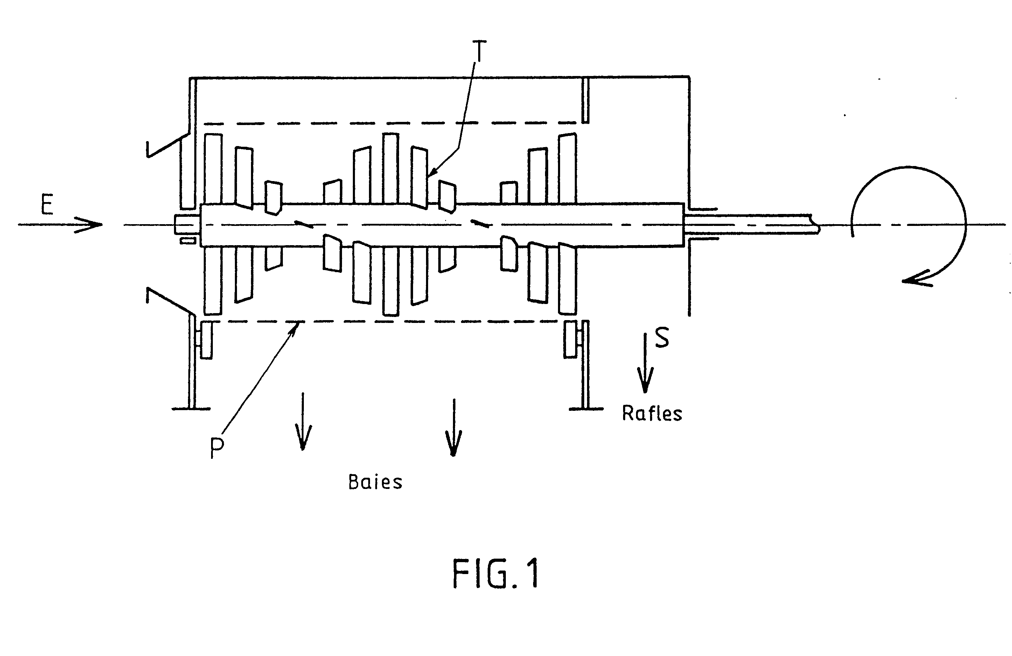

La configuration de ces égrappoirs est généralement horizontale. La vendange entière arrive par un orifice d'entrée (E), est prise par exemple par une turbine (T) et, sous l'action mécanique de cette turbine, les baies traversent un tambour perforé (P) et les rafles sortent par une extrémité de sortie (S) (voir la fig. 1 des dessins annexés).

A l'heure actuelle certaines turbines utilisées se composent d'un cylindre équipé de pales ayant la même forme, cylindres ou ailettes, sur toute la longueur (cf FR-A 1 291 697 et DE-A 2 015 130).

On connaît d'autres appareils égrappoirs qui sont à deux turbines, dont l'une est à aubes, et à double tambour.

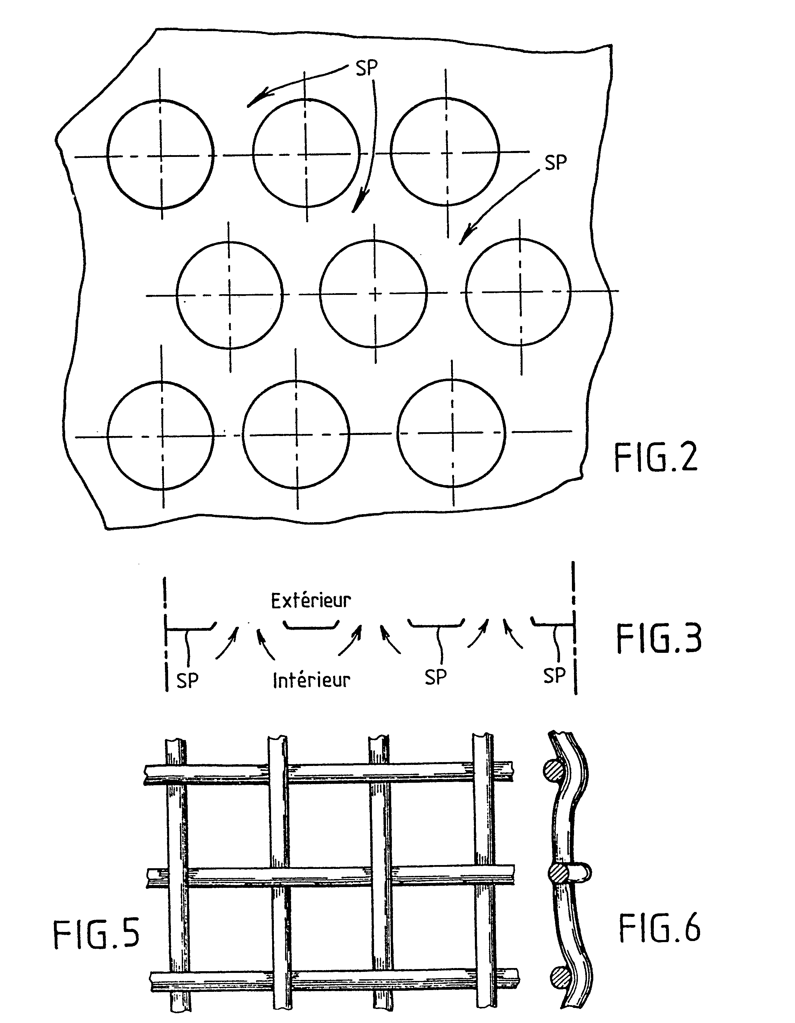

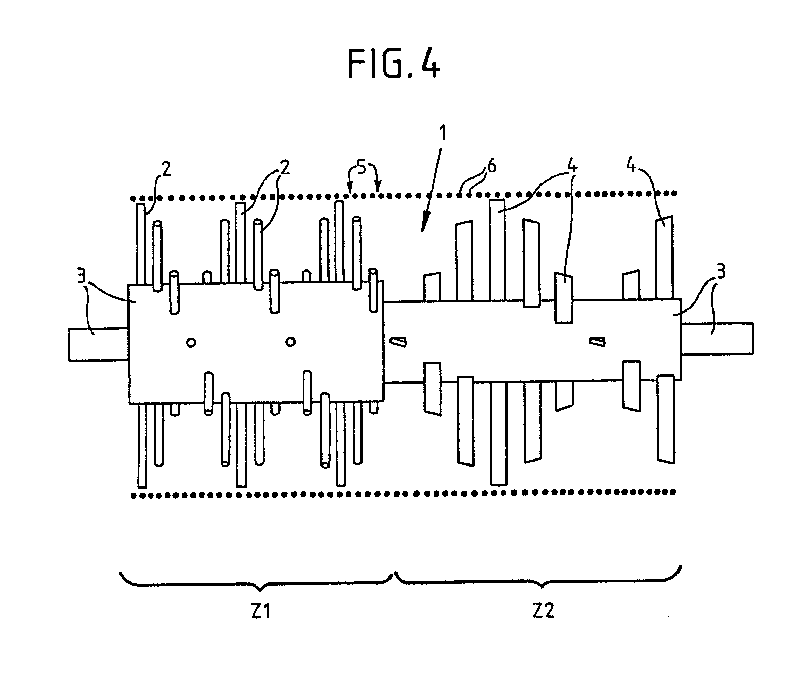

Sur certains égrappoirs les tambours cylindriques sont constitués d'une tôle en acier inoxydable perforée par emboutissage. Mais l'emboutissage oblige à laisser un espacement entre chaque trou en raison des impératifs de fabrication: outillage et déformation des tôles. De plus, il faut adoucir l'angle des perforations afin d'éviter le déchirement des baies (voir les fig. 2 et 3 des dessins annexés). Ces contraintes imposent une certaine surface pleine (SP) sur laquelle les baies projetées par la turbine vont s'éclater, ce qui est absolument contraire au but œnologique recherché: la moindre altération possible des baies.

Voir en particulier le document de l'art connu DE-C 804 617.

Ce document décrit une machine pour le prétraitement du raisin qui comprend une combinaison de trois dispositifs à savoir: un moulin à raisin, un récepteur préliminaire de jus et une machine égrappeuse. Ce récepteur et cette machine égrappeuse sont aboutés l'un à l'autre et comprennent un tambour rotatif qui leur est commun.

Dans sa partie comprise dans le récepteur ce tambour est muni de trous allongés par lesquels s'écoule le jus, et dans sa partie comprise dans la machine égrappeuse le tambour est muni de trous ronds par lesquels tombent les baies détachées par cette machine.

Le récepteur comporte des ailettes de transport et la machine égrappeuse comporte des pointes d'égrappage disposées sur un arbre qui tourne en sens inverse du sens de rotation du tambour.

La présente invention vise l'amélioration des égrappoirs à vendange dans l'optique d'un meilleur résultat œnologique tout en augmentant le débit rendu nécessaire dans les grandes unités de traitement de la vendange. En effet, tout vinificateur cherche à obtenir de ces appareils des baies si possible intactes afin de faciliter le travail de la vinification.

L'invention vise en particulier un égrappoir à vendange du type de celui décrit dans la revendication 1 annexée.

D'autres caractéristiques et avantages de la présente invention ressortiront de la description qui va suivre faite en regard des dessins annexés sur lesquels:

la fig. 1 est un schéma représentant un égrappoir d'un type connu;

les fig. 2 et 3 sont des vues respectivement en plan et en coupe partielle d'une portion de tambour perforé d'un égrappoir connu;

la fig. 4 est une vue en élévation d'une turbine mixte selon l'invention

les fig. 5 et 6 sont des vues respectivement en plan et de profil d'une portion de tambour selon l'invention.

Un égrappoir à vendange conforme à l'invention comprend une unique turbine mais mixte (1) composée, du côté alimentation, de bâtonnets cylindriques (2) disposés hélicoïdalement autour de l'arbre tournant (3) et ce sur une partie de cet arbre (zone Z1).

Les bâtonnets cylindriques sont prévus pour travailler la vendange d'une manière douce, les baies se détachant de la grappe sans être abimées.

L'autre partie de la turbine (zone Z2) est composée de pales (4) en forme d'ailettes, également disposées hélicoïdalement autour de l'arbre (53). Ces palettes jouent l'effet d'une turbine proprement dite et dégagent rapidement les rafles déjà libérées de leurs baies. Cette disposition de l'invention permet un égrappage doux suivi d'un dégagement rapide de la rafle.

Les bâtonnets (2) comme les pales (4) peuvent être à pas réglable.

Conformément à l'invention également, le raport «perforation/surface pleine» du tambour qui est un tambour grillagé (5–6) est amené à un maximum. La grandeur «surface pleine» (SP) de ce rapport est choisie la plus réduite possible, la grandeur «perforation» du rapport restant suffisante pour le passages des baies.

On peut préciser que, suivant cette condition, ledit rapport «perforation/surface pleine» peut être différent dans certaines portions du tambour grillagé comparativement à d'autres portions dudit tambour.

Suivant une forme de réalisation particulièrement avantageuse, le tambour grillagé est constitué par un grillage en acier inoxydable d'une maille (5) suffisamment grande, avec un fil cylindrique (6) d'un diamètre tel qu'il évite toute lacération des baies (fig. 4 et 5).

Cette disposition à treillis métallique, outre sa facilité d'emploi, offre le maximum d'ouverture possible pour le passage sans altération des baies.

Il est bien entendu enfin que la présente invention n'a été décrite et représentée qu'à titre d'exemple préférentiel.

## Revendications

1. Egrappoir à vendange du type à turbine (1), arbre tournant (3) et tambour dont l'unique turbine est mixte et comporte une zone (Z1) de bâtonnets (2) et une zone (Z2) de pales (4) disposés hélicoïdalement autour de l'arbre tournant (3) caractérisé en ce que la zone (Z1) de bâtonnets (2) destinés à produire un égrappage doux, est située du côté alimentation du tambour et est suivie de la zone (Z2) des pales assurant un dégagement rapide des rafles et en ce que le tambour est un tambour grillagé (5, 6) ayant un rapport «perforation/surface pleine» maximum, avec une grandeur «surface pleine» (SP) choisie la plus réduite possible, et une grandeur «perforation» de manière à altérer le moins possible les baies sur la surface pleine.

2. Egrappoir selon la revendication 1, caractérisé en ce que les pales (4) de la zone (Z2) de la turbine mixte (1) sont en forme d'ailettes disposées hélicoïdalement autour de l'arbre tournant de l'égrappoir.

3. Egrappoir selon l'une quelconque des revendications 1 et 2, caractérisé en ce que bâtonnets (2) et pales (4) sont à pas réglable.

4. Egrappoir selon la revendication 1, caractérisé en ce que le rapport «perforation/surface pleine» peut être différent dans certaines portions du tambour grillagé (5-6) comparativement à d'autres portions dudit tambour.

5. Egrappoir selon l'une quelconque des revendications 1 et 4, caractérisé en ce que le tambour grillagé est constitué par un grillage de fils cylindriques (6) à mailles (5) pour le passage sans altération des baies.

## Patentansprüche

1. Abbeermaschine zur Weinlese des Typs mit Turbine (1), Drehwelle (3) und Trommel, wobei die einzige Turbine eine Mischturbine ist und eine Zone (Z1) mit Stäben (2) und eine Zone (Z2) mit Blättern (4) besitzt, die wendelförmig um die Drehwelle (3) angeordnet sind, dadurch gekennzeichnet, dass die Zone (Z1) der Stäbe (2), die zur Erzeugung eines sanften Abbeerens bestimmt ist, an der Zufuhrseite der Trommel gelegen ist und von der Zone (Z2) der Blätter gefolgt, die ein rasches Entfernen der Stiele sicherstellt, und dass die Trommel eine Gittertrommel (5, 6) ist, die ein maximales Verhältnis «Lochung/Vollfläche» besitzt mit einer Grösse der «Vollfläche» (SP), die so weit wie möglich verringert gewählt ist, und einer Grösse «Lochung», die für das Durchtreten der Beeren ausreicht in der Art, dass die Beeren an der Vollfläche so wenig wie möglich beeinträchtigt werden.

2. Abbeermaschine nach Anspruch 1, dadurch gekennzeichnet, dass die Blätter (4) der Zone (Z2) der Mischturbine (1) die Form von wendelförmig um die Drehwelle der Abbeermaschine angeordneten Flügeln haben.

3. Abbeermaschine nach einem der Ansprüche 1 oder 2, dadurch gekennzeichnet, dass die Stäbe (2) und die Blätter (4) einstellbaren Abstand besitzen.

4. Abbeermaschine nach Anspruch 1, dadurch gekennzeichnet, dass das Verhältnis «Lochung/Vollfläche» an bestimmten Abschnitten der Gittertrommel (5, 6) unterschiedlich im Vergleich anderen Abschnitten der Trommel sein kann.

5. Abbeermaschine nach einem der Ansprüche 1 und 4, dadurch gekennzeichnet, dass die Gittertrommel durch ein Gitter aus zylindrischen Drähten (6) mit Maschen (5) zum beeinträchtigungsfreien Durchtritt der Beeren gebildet ist.

## Claims

1. Grape-picker for harvesting, of the type having a turbine (1), a rotating shaft (3) and a drum, in which the single turbine is of the mixed type and possesses a zone (Z1) of rods (2) and a zone (Z2) of blades (4) disposed helically around the rotating shaft (3), characterised in that the zone (Z1) of rods (2) intended to produce a gentle picking effect is located on the feed side of the drum and is followed by the zone (Z2) of blades producing rapid separation of the stalks, and in that the drum is a railed-in drum (5, 6) having a maximum «perforation/intact surface» ratio, with an «intact surface» (SP) extent which is selected to be as small as possible, and a «perforation» extent sufficient for the passage of the grapes, in a manner such as to cause as little as possible deterioration of the grapes on the intact surface.

2. Grape-picker according to Claim 1, characterised in that the blades (4) of the zone (Z2) of the mixed turbine (1) are in the form of fins disposed helically around the rotating shaft of the grape-picker.

3. Grape-picker according to either of Claims 1 and 2, characterised in that the rods (2) and blades (4) are of adjustable pitch.

4. Grape-picker according to Claim 1, characterised in that the «perforation/intact surface» ratio may be different in certain sections of the railed-in drum (5, 6) as compared with other sections of the said drum.

5. Grape-picker according to either of Claims 1 and 4, characterised in that the railed-in drum is formed by a grating of cylindrical wires (6) having meshes (5) for the unimpaired passage of the grapes.

FIG.1

E

T

P

Baies

Rafles

S

0 108 653

SP

SP

SP

**FIG.2**

Extérieur

SP          Intérieur          SP          SP

**FIG.3**

**FIG.5**

**FIG.6**

# FIG.4

0 108 653